# FASCICULE DE BREVET EUROPEEN

(11) **EP 3 141 365 B1**
(45) Date de publication et mention de la délivrance du brevet: **12.12.2018**
(21) Numéro de dépôt: 15306392.0
(22) Date de dépôt: 11.09.2015
(51) Int. Cl.: B29B 17/02

(54) **PROCÉDÉ ET INSTALLATION DE RECYCLAGE DE THERMOPLASTIQUES FILAMENTAIRES CONTAMINÉS PAR DES MATIÈRES INDÉSIRABLES**
RECYCLINGVERFAHREN VON THERMOPLASTISCHEN FASERN, DIE SCHADSTOFFVERSEUCHT SIND
METHOD FOR RECYCLING FILAMENTARY THERMOPLASTICS CONTAMINATED BY UNDESIRABLE MATERIALS

(43) Date de publication de la demande: 15.03.2017
(73) Titulaire: Recyouest, 50760 Montfarville (FR)
(72) Inventeur: MOISSON, Rosa Marcela, 50760 MONTFARVILLE (FR); DUVAL, Jean-Luc, 50760 MONTFARVILLE (FR)
(74) Mandataire: Cabinet Le Guen Maillet

(56) Documents cités:
- DE-A1- 4 125 164
- N.N.: "Green News Techno", , 7 novembre 2014 (2014-11-07), pages 1-8, XP055253490, Extrait de l'Internet: URL:http://green-news-techno.net/fichiers/ 201411070715_GNT_447.pdf [extrait le 2016-02-26]
- La France Agricole: "Ficelles et filets agricoles usagés : CPA et Adivalor annoncent les premières collectes en avril 2013", , 15 janvier 2013 (2013-01-15), XP055185780, Extrait de l'Internet: URL:http://www.lafranceagricole.fr/actuali te-agricole/ficelles-et-filets-agricoles-u sages-cpa-et-adivalor-annoncent-les-premie res-collectes-en-avril-2013-67032.html [extrait le 2015-04-24]

## Description

La présente invention concerne un procédé de recyclage de thermoplastiques filamentaires contaminés par d'autres matières, en particulier des filets en polyéthylène haute densité (PEhd), ainsi qu'une ligne de recyclage comportant les moyens pour mettre en oeuvre ledit procédé de recyclage.

L'utilisation de filets en PEhd est actuellement très répandue. Par exemple, de tels filets sont utilisés dans l'agriculture pour lier les balles rondes de paille.

Actuellement de tels filets ne sont pas recyclés en fin de vie. Le document « green news techno » du 7/11/2014 décrit un procédé de recyclage.

Un objet de la présente invention est de proposer un procédé de recyclage de thermoplastiques filamentaires, issus en particulier d'emballages, qui ne présente pas les inconvénients de l'art antérieur et qui en particulier permet un recyclage performant.

A cet effet, est proposé un procédé de recyclage s'appliquant à des filaments thermoplastiques mêlés à des matières indésirables, le procédé de recyclage comportant successivement :
- une étape d'alimentation au cours de laquelle les filaments thermoplastiques et les matières indésirables sont déposés en paquets sur un tapis de convoyage horizontal,
- une étape d'étalement au cours de laquelle les filaments thermoplastiques et les matières indésirables sont étalés horizontalement de manière à former une nappe,
- une étape de coupe horizontale au cours de laquelle la nappe de filaments thermoplastiques et de matières indésirables est arasée selon une direction parallèle au tapis de convoyage,
- une première étape de coupe au cours de laquelle la nappe de filaments thermoplastiques et de matières indésirables est découpée selon une première direction verticale, en formant des tronçons,
- une deuxième étape de coupe au cours de laquelle les tronçons de nappes de filaments thermoplastiques et de matières indésirables sont découpés selon une deuxième direction verticale orthogonale à la première direction verticale,
- une première étape d'aspiration au cours de laquelle les filaments thermoplastiques et les matières indésirables ainsi découpés sont aspirés vers le haut,
- une étape d'effilochage au cours de laquelle les filaments thermoplastiques et les matières indésirables ainsi aspirés sont effilochés,
- une étape de battage au cours de laquelle les filaments thermoplastiques et les matières indésirables ainsi effilochés sont battus,
- une étape de pré-broyage au cours de laquelle les filaments thermoplastiques et les matières indésirables ainsi battus sont broyés sous forme de fibrilles de 12 à 15 mm,
- une étape d'agglomération au cours de laquelle les filaments thermoplastiques et les matières indésirables ainsi broyés sont compactés sous forme d'agglomérats thermoplastiques, tandis que les matières indésirables et une faible partie des fibrilles thermoplastiques non agglomérées se mélangent et forment des fines,
- une étape de broyage au cours de laquelle les agglomérats thermoplastiques et les fines sont broyés de façon à uniformiser la taille des agglomérats à 12 mm environ,
- une étape de séparation au cours de laquelle les agglomérats thermoplastiques et les fines ainsi broyés et uniformisés sont séparés par gravimétrie, et
- une étape de récupération au cours de laquelle les agglomérats thermoplastiques ainsi séparés des fines sont récupérés et constituent le thermoplastique recyclé.

Avantageusement, le procédé de recyclage comporte entre la première étape d'aspiration et l'étape d'effilochage :
- une étape de brumisation au cours de laquelle les filaments thermoplastiques et les matières indésirables ainsi aspirés sont humidifiés par une brumisation d'eau,
- une étape de brassage au cours de laquelle les filaments thermoplastiques et les matières indésirables ainsi humidifiés sont brassés, et
- une deuxième étape d'aspiration au cours de laquelle les filaments thermoplastiques et les matières indésirables ainsi brassés sont aspirés vers le haut.

Avantageusement, le procédé de recyclage comporte avant l'étape d'alimentation, une étape de séchage au cours de laquelle les filaments thermoplastiques et les déchets subissent un abaissement du taux d'humidité à 15%.

Avantageusement, le procédé de recyclage comporte, après l'étape de récupération, une étape d'extrusion au cours de laquelle les agglomérats thermoplastiques récupérés subissent une extrusion.

L'invention propose également une ligne de recyclage s'appliquant à des filaments thermoplastiques mêlés à des matières indésirables et comportant successivement :
- des moyens d'alimentation configurés pour déposer les filaments thermoplastiques et les matières indésirables sur un tapis de convoyage horizontal,
- des moyens d'étalement configurés pour étaler horizontalement les filaments thermoplastiques et les matières indésirables afin de former une nappe,
- des moyens de coupe horizontale configurés pour araser la nappe de filaments thermoplastiques et de matières indésirables selon une direction parallèle au tapis de convoyage,
- des premiers moyens de coupe configurés pour découper la nappe de filaments thermoplastiques et de matières indésirables selon une première direction verticale,
- des deuxièmes moyens de coupe configurés pour découper des tronçons de filaments thermoplastiques et de matières indésirables selon une deuxième direction verticale orthogonale à la première direction verticale,
- des premiers moyens d'aspiration configurés pour aspirer vers le haut les filaments thermoplastiques et les matières indésirables,
- des moyens d'effilochage configurés pour effilocher les filaments thermoplastiques et les matières indésirables,
- des moyens de battage configurés pour battre les filaments thermoplastiques et les matières indésirables,
- des moyens de pré-broyage configurés pour broyer les filaments thermoplastiques et les matières indésirables sous forme de fibrilles de 12 à 15 mm,
- des moyens d'agglomération configurés pour compacter des fibrilles thermoplastiques et les matières indésirables sous forme d'agglomérats thermoplastiques,
- des moyens de broyage configurés pour broyer et uniformiser les agglomérats thermoplastiques à une taille de 12 mm environ,
- des moyens de séparation configurés pour séparer par gravimétrie les agglomérats thermoplastiques et les fines, et
- des moyens de récupération configurés pour récupérer les agglomérats thermoplastiques.

Avantageusement, la ligne de recyclage comporte en outre entre les premiers moyens d'aspiration et les moyens d'effilochage :
- des moyens de brumisation configurés pour humidifier les filaments thermoplastiques et les matières indésirables par une brumisation d'eau,
- des moyens de brassage configurés pour brasser les filaments thermoplastiques et les matières indésirables, et
- des deuxièmes moyens d'aspiration configurés pour aspirer vers le haut les filaments thermoplastiques et les matières indésirables.

Avantageusement, la ligne de recyclage comporte avant les moyens d'alimentation, des moyens de séchage configurés pour faire baisser le taux d'humidité des filaments thermoplastiques et des matières indésirables à 15%.

Avantageusement, la ligne de recyclage comporte, après les moyens de récupération, des moyens d'extrusion configurés pour réaliser une extrusion des agglomérats thermoplastiques.

Les caractéristiques de l'invention mentionnées ci-dessus, ainsi que d'autres, apparaîtront plus clairement à la lecture de la description suivante d'un exemple de réalisation, ladite description étant faite en relation avec la Fig. unique qui représente un algorithme d'un procédé de recyclage selon l'invention.

Dans la description qui suit, les termes relatifs à une position sont pris en référence au sol.

La Fig. unique montre un procédé de recyclage 100 selon l'invention.

Le procédé de recyclage 100 s'applique à des produits réalisés à partir de filaments thermoplastiques 52, en particulier en PEhd, contaminés par des matières de natures différentes 54, dites matières indésirables. Il s'agit par exemple de filets réalisés en PEhd chargés de résidus de paille et de poussières après usage. Le procédé de recyclage 100 permet de séparer au mieux les filaments thermoplastiques 52 et les matières indésirables 54 et de fournir une matière première recyclée à base du thermoplastique d'origine dite « matière première secondaire ».

Le procédé de recyclage 100 comporte successivement :
- une étape d'alimentation 102 au cours de laquelle les filaments thermoplastiques 52 mêlés de matières indésirables 54 sont déposés en paquets sur un tapis de convoyage horizontal,
- une étape d'étalement 103 au cours de laquelle les filaments thermoplastiques 52 et les matières indésirables 54 sont étalés horizontalement de manière à former une nappe uniforme de filaments thermoplastiques 52 et les matières indésirables 54 qui est conduite vers l'étape suivante,
- une étape de coupe horizontale 104 au cours de laquelle la nappe de filaments thermoplastiques 52 et de matières indésirables 54 est arasée selon une direction parallèle au tapis de convoyage, en particulier selon une épaisseur de l'ordre de 8 à 10 cm,
- une première étape de coupe 106 au cours de laquelle la nappe de filaments thermoplastiques 52 et de matières indésirables 54 est découpée selon une première direction verticale, en particulier à l'aide d'une guillotine, en formant des tronçons,
- une deuxième étape de coupe 108 au cours de laquelle les tronçons de nappes de filaments thermoplastiques 52 et de matières indésirables 54 sont découpés selon une deuxième direction verticale orthogonale à la première direction verticale, en particulier à l'aide d'une guillotine,
- une première étape d'aspiration 110 au cours de laquelle les filaments thermoplastiques 52 et les matières indésirables 54 ainsi découpés sont aspirés vers le haut tandis que les éléments lourds chutent vers le bas et sont récupérés et séparés des filaments thermoplastiques 52,
- une étape d'effilochage 118 au cours de laquelle les filaments thermoplastiques 52 et les matières indésirables 54 ainsi aspirés sont effilochés, c'est-à-dire démêlés par étirage ce qui provoque entre autres le décollement de poussières,
- une étape de battage 120 au cours de laquelle les filaments thermoplastiques 52 et les matières indésirables 54 ainsi effilochés sont battus permettant la séparation des filaments thermoplastiques 52 et des matières indésirables 54,
- une étape de pré-broyage 122 au cours de laquelle les filaments thermoplastiques 52 et les matières indésirables 54 ainsi battus sont broyés sous forme de fibrilles de 12 à 15 mm,
- une étape d'agglomération 124 au cours de laquelle les fibrilles thermoplastiques 52 et les matières indésirables 54 ainsi broyées sont compactées sous forme d'agglomérats thermoplastiques, tandis que les matières indésirables 54 et une faible partie de fibrilles thermoplastiques non agglomérées se mélangent et forment des fines,
- une étape de broyage 126 au cours de laquelle les agglomérats thermoplastiques et les fines sont broyés de façon à uniformiser la taille des agglomérats à 12 mm environ (soit +/- 3 mm) qui permet d'augmenter la masse volumique apparente et avoir des agglomérats qui peuvent être mieux travaillés par la suite,
- une étape de séparation 128 au cours de laquelle les agglomérats thermoplastiques et les fines ainsi broyés et uniformisés sont séparés par gravité, et
- une étape de récupération 130 au cours de laquelle les agglomérats thermoplastiques ainsi séparés des fines sont récupérés et stockés et constituent le thermoplastique recyclé.

Un tel procédé de recyclage 100 permet d'éliminer progressivement la majorité des matières indésirables 54 mêlées aux filaments thermoplastiques 52, en particulier dans le cas de filets en PEhd, en séparant la paille du Phd. Le procédé comporte une succession d'étapes qui déstructurent les matériaux d'origine selon différentes méthodes pour séparer à chaque fois une part des matières indésirables 54 des filaments thermoplastiques 52. En outre, le procédé de recyclage 100 n'utilise pas d'eau ce qui évite d'avoir à épurer cette eau après traitement et rend ainsi le procédé de recyclage 100 particulièrement écologique.

Selon un mode de réalisation particulier, afin d'éliminer l'électricité statique, le procédé de recyclage 100 comporte entre la première étape d'aspiration 110 et l'étape d'effilochage 118 :
- une étape de brumisation 112 au cours de laquelle les filaments thermoplastiques 52 et les matières indésirables 54 ainsi aspirés sont humidifiés par une brumisation d'eau,
- une étape de brassage 114 au cours de laquelle les filaments thermoplastiques 52 et les matières indésirables 54 ainsi humidifiés sont brassés, et
- une deuxième étape d'aspiration 116 au cours de laquelle les filaments thermoplastiques 52 et les matières indésirables 54 ainsi brassés sont aspirés vers le haut, tandis que les éléments lourds tombent vers le bas et sont récupérés pour sortir du processus.

L'étape d'étalement 103 permet de former une nappe de filaments thermoplastiques 52 et de matières indésirables 54 qui soit suffisamment dense et régulière pour pouvoir ensuite subir l'étape de coupe horizontale 104.

Les étapes de coupe 104, 106 et 108 permettent de sectionner les filaments thermoplastiques 52 selon trois directions et de limiter la dimension des filaments thermoplastiques 52 et des matières indésirables 54 et ainsi d'empêcher que ces filaments thermoplastiques 52 ne s'accrochent lors des étapes ultérieures.

Les étapes d'aspiration 110, 116 permettent de séparer les éléments légers (filaments thermoplastiques 52 et les fibres végétales des matières indésirables 54) des éléments lourds (certaines matières indésirables 54) qui sont trop lourds pour être aspirés comme par exemple les amas de paille humide ou les graviers. En effet, les filaments thermoplastiques 52 et les éléments légers des matières indésirables 54 qui y restent mêlés sont aspirés vers le haut tandis que les déchets lourds sont évacués vers le bas.

Lorsqu'elle est présente, l'étape de brumisation 112 favorise aussi le glissement des filaments thermoplastiques 52 et matières indésirables 54 les uns par rapport aux autres et le peignage et le démêlage ultérieurs.

L'étape d'effilochage 118 est réalisée par exemple à l'aide d'une machine dite « ouvreuse » qui démêle les touffes à l'aide de cylindres ouvreurs garnis de pointes. La rotation à grande vitesse des cylindres divisent et parallélisent les filaments thermoplastiques 52 et retiennent une partie des déchets 54. Les éléments qui ne sont pas démêlés sont rejetés.

L'étape de battage 120 est réalisée par exemple à l'aide d'une machine dite « batteuse » qui comporte une pluralité de rouleaux à pointes disposés ascensionnellement les uns après les autres. Par actions successives, les filaments thermoplastiques 52 et les matières indésirables 54 sont peignés ce qui tend à les séparer et à les nettoyer. Une partie des matières indésirables 54 ainsi séparée est rejetée vers le bas tandis que les filaments thermoplastiques 52 et le reste des matières indésirables 54 (en particulier des fibres végétales) poursuivent leur ascension jusqu'à la sortie de la batteuse.

L'étape d'agglomération 124 consiste à introduire les fibrilles thermoplastiques 52 et matières indésirables 54 dans une machine dite « compacteur » qui présente généralement un disque fixe et un disque mobile en rotation. Les disques sont rainurés radialement et la friction permet une élévation de température qui va agglomérer les fibrilles thermoplastiques 52 sous forme d'agglomérats thermoplastiques. Le compacteur met à profit les conditions d'agglomération qui sont différentes entre les fibrilles thermoplastiques 52 et les matières indésirables 54 (en particulier les fibres végétales) ce qui empêche l'agglomération des fibrilles thermoplastiques 52 et des matières indésirables 54 entre elles.

Les différentes étapes sont réalisées par des machines appropriées. Entre les différentes machines, le transport des matériaux s'effectue de préférence par un convoyeur pneumatique qui permet d'effectuer un dépoussiérage avant l'entrée de la machine suivante, en particulier en évacuant la poussière qui a été séparée des filaments thermoplastiques 52 lors de l'étape précédente. Un mode de réalisation particulier de la séparation consiste à disposer un ventilateur d'aspiration qui génère une dépression suffisante pour aspirer les matériaux sortant de la machine dans une tuyauterie. Selon la puissance du ventilateur, des éléments trop lourds pour être aspirés tombent sur un tapis récupérateur. Un mode de réalisation particulier de dépoussiérage consiste à séparer les poussières et les matériaux à traiter au moyen de filtres et de la gravité. Les poussières de petites dimensions traversent alors les filtres et s'évacuent avec l'air tandis que les filaments thermoplastiques 52 et les matières indésirables 54 de plus grandes dimensions sont bloqués par les filtres et tombent, avec la disparition de la sustentation du flux d'air, dans la machine effectuant l'étape de traitement ultérieur.

Une ligne de recyclage s'appliquant à des filaments thermoplastiques 52 mêlés de matières indésirables 54, et mettant en oeuvre le procédé de recyclage 100 ci-dessus comporte alors successivement :
- des moyens d'alimentation configurés pour déposer les filaments thermoplastiques 52 mêlés de matières indésirables 54 sur le tapis de convoyage horizontal,
- des moyens d'étalement configurés pour étaler les filaments thermoplastiques 52 et les matières indésirables 54 afin de former une nappe uniforme de filaments thermoplastiques 52 et de matières indésirables 54 et la conduire vers les moyens suivants,
- des moyens de coupe horizontale configurés pour araser la nappe de filaments thermoplastiques 52 et de matières indésirables 54 selon une direction parallèle au tapis de convoyage, en particulier selon une épaisseur de l'ordre de 8 à 10 cm,
- des premiers moyens de coupe, comme par exemple une guillotine, configurés pour découper la nappe de filaments thermoplastiques 52 et de matières indésirables 54 selon une première direction verticale, afin de former des tronçons
- des deuxièmes moyens de coupe, comme par exemple une guillotine, configurés pour découper les tronçons de nappes de filaments thermoplastiques 52 et de matières indésirables 54 selon une deuxième direction verticale orthogonale à la première direction verticale,
- des premiers moyens d'aspiration configurés pour aspirer vers le haut les filaments thermoplastiques 52 et les matières indésirables 54, tandis que les éléments lourds chutent vers le bas et sont récupérés,
- des moyens d'effilochage configurés pour effilocher les filaments thermoplastiques 52 et les matières indésirables 54,
- des moyens de battage configurés pour battre les filaments thermoplastiques 52 et les matières indésirables 54,
- des moyens de pré-broyage configurés pour broyer les filaments thermoplastiques 52 et les matières indésirables 54 sous forme de fibrilles de 12 à 15 mm,
- des moyens d'agglomération configurés pour compacter des fibrilles thermoplastiques 52 sous forme d'agglomérats thermoplastiques,
- des moyens de broyage configurés pour broyer et ainsi uniformiser les agglomérats thermoplastiques à une taille de 12 mm environ,
- des moyens de séparation configurés pour séparer par gravimétrie les agglomérats thermoplastiques et les fines, et
- des moyens de récupération configurés pour récupérer les agglomérats thermoplastiques.

Dans le cas d'une présence de brumisation, la ligne de recyclage comporte entre les premiers moyens d'aspiration et les moyens d'effilochage :
- des moyens de brumisation configurés pour humidifier les filaments thermoplastiques 52 et les matières indésirables 54 par une brumisation d'eau,
- des moyens de brassage configurés pour brasser les filaments thermoplastiques 52 et les matières indésirables 54, et
- des deuxièmes moyens d'aspiration configurés pour aspirer vers le haut les filaments thermoplastiques 52 et les matières indésirables 54.

Les moyens d'étalement et les moyens de coupe horizontale sont par exemple constitués d'une chargeuse automatique de la société Pierret Industries appelée « robot » qui permet, grâce à des dents escamotables et animées d'un mouvement de va-et-vient, d'étaler les filaments thermoplastiques 52 et les matières indésirables 54 vers un canal de sortie où se forme une nappe et qui présente en sortie un système de découpe horizontale constituant les moyens de coupe horizontale.

Les premiers moyens de coupe et les deuxièmes moyens de coupe sont constitués par exemple de deux coupeuses guillotine de la société Pierret Industries et appelées CT60.

Les moyens d'aspiration sont constitués par exemple d'un ventilateur de transfert de la société Laroche et appelé VT 540 TR, et combiné à un système de piégeage à corps lourd de la société Laroche et appelé ODT.

Les moyens de brumisation sont constitués par exemple d'une unité d'ensimage en tuyauterie de la société Laroche et appelée OT.

Les moyens de brassage sont constitués par exemple d'un casier de mélange de la société Laroche et appelé SM 3900. Un tel dispositif permet d'homogénéiser les éléments à séparer.

Les moyens d'effilochage sont constitués par exemple d'une ouvreuse de la société Laroche et appelée Excel 2000.

Les moyens de battage sont constitués par exemple d'une nettoyeuse-batteuse de la société Laroche NB 6T 2000.

Les moyens de pré-broyage sont constitués par exemple d'un broyeur de la société Herbold et appelé SML 60/100-S5-2.

Les moyens d'agglomération sont constitués par exemple d'un silo tampon avec une vis sans fin qui refoule les matériaux entre les disques du compacteur constitué par exemple d'un densifieur de la société Herbold et appelé HV 70/250.

Les moyens de broyage sont constitués par exemple d'un broyeur de la société Herbold et appelé SML 45/100-S4-2.

Les moyens de séparation sont constitués par exemple par un séparateur gravimétrique de la société Herbold et appelé SZS 630/200.

Les moyens de récupération sont constitués de tous moyens permettant de stocker des agglomérats thermoplastiques, comme un silo par exemple.

L'ensemble de la ligne de recyclage est mis à la terre et le degré d'hygrométrie est contrôlé pour éliminer l'électricité statique pouvant se former par frottement des déchets plastiques.

Préalablement à l'étape d'alimentation 102, les filaments thermoplastiques 52 et les matières indésirables 54 subissent une étape de séchage. A cette fin, la ligne de recyclage comporte avant les moyens d'alimentation, des moyens de séchage comme par exemple un séchoir à air chaud pulsé. Cette étape de séchage permet d'abaisser le taux d'humidité des filaments thermoplastiques 52 et des matières indésirables 54, à 15% (soit +/- 3%). Un tel séchage évite par la suite le collage des éléments trop humides entre eux ou dans les machines.

Le procédé de recyclage 100 peut également présenter après l'étape de récupération 130, une étape d'extrusion au cours de laquelle les agglomérats thermoplastiques récupérés subissent une extrusion. A cette fin, la ligne de recyclage comporte, après les moyens de récupération, des moyens d'extrusion comme par exemple une extrudeuse appropriée.

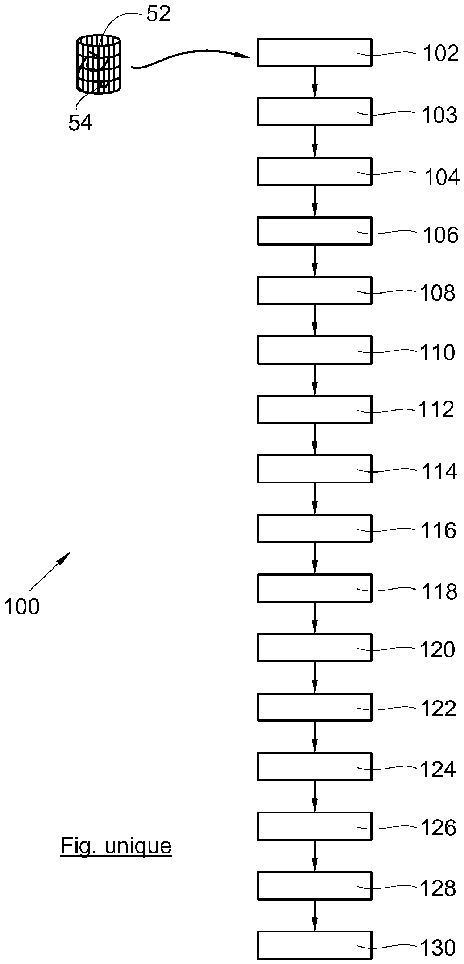

## Revendications

1. Procédé de recyclage (100) s'appliquant à des filaments thermoplastiques (52) mêlés à des matières indésirables (54), le procédé de recyclage (100) comportant successivement :
- une étape d'alimentation (102) au cours de laquelle les filaments thermoplastiques (52) et les matières indésirables (54) sont déposés en paquets sur un tapis de convoyage horizontal,
- une étape d'étalement (103) au cours de laquelle les filaments thermoplastiques (52) et les matières indésirables (54) sont étalés horizontalement de manière à former une nappe,
- une étape de coupe horizontale (104) au cours de laquelle la nappe de filaments thermoplastiques (52) et de matières indésirables (54) est arasée selon une direction parallèle au tapis de convoyage,
- une première étape de coupe (106) au cours de laquelle la nappe de filaments thermoplastiques (52) et de matières indésirables (54) est découpée selon une première direction verticale, en formant des tronçons,
- une deuxième étape de coupe (108) au cours de laquelle les tronçons de nappes de filaments thermoplastiques (52) et de matières indésirables (54) sont découpés selon une deuxième direction verticale orthogonale à la première direction verticale,
- une première étape d'aspiration (110) au cours de laquelle les filaments thermoplastiques (52) et les matières indésirables (54) ainsi découpés sont aspirés vers le haut,
- une étape d'effilochage (118) au cours de laquelle les filaments thermoplastiques (52) et les matières indésirables (54) ainsi aspirés sont effilochés,
- une étape de battage (120) au cours de laquelle les filaments thermoplastiques (52) et les matières indésirables (54) ainsi effilochés sont battus,
- une étape de pré-broyage (122) au cours de laquelle les filaments thermoplastiques (52) et les matières indésirables (54) ainsi battus sont broyés sous forme de fibrilles de 12 à 15 mm,
- une étape d'agglomération (124) au cours de laquelle les filaments thermoplastiques (52) et les matières indésirables (54) ainsi broyés sont compactés sous forme d'agglomérats thermoplastiques, tandis que les matières indésirables (54) et une faible partie des fibrilles thermoplastiques non agglomérées se mélangent et forment des fines,
- une étape de broyage (126) au cours de laquelle les agglomérats thermoplastiques et les fines sont broyés de façon à uniformiser la taille des agglomérats à 12 mm environ,
- une étape de séparation (128) au cours de laquelle les agglomérats thermoplastiques et les fines ainsi broyés et uniformisés sont séparés par gravimétrie, et
- une étape de récupération (130) au cours de laquelle les agglomérats thermoplastiques ainsi séparés des fines sont récupérés et constituent le thermoplastique recyclé.

2. Procédé de recyclage (100) selon la revendication 1, **caractérisé en ce qu'**il comporte entre la première étape d'aspiration (110) et l'étape d'effilochage (118) :
- une étape de brumisation (112) au cours de laquelle les filaments thermoplastiques (52) et les matières indésirables (54) ainsi aspirés sont humidifiés par une brumisation d'eau,
- une étape de brassage (114) au cours de laquelle les filaments thermoplastiques (52) et les matières indésirables (54) ainsi humidifiés sont brassés, et
- une deuxième étape d'aspiration (116) au cours de laquelle les filaments thermoplastiques (52) et les matières indésirables (54) ainsi brassés sont aspirés vers le haut.

3. Procédé de recyclage (100) selon l'une des revendications 1 ou 2, **caractérisé en ce qu'**il comporte avant l'étape d'alimentation (102), une étape de séchage au cours de laquelle les filaments thermoplastiques (52) et les déchets (54) subissent un abaissement du taux d'humidité à 15%.

4. Procédé de recyclage (100) selon l'une des revendications 1 à 3, **caractérisé en ce qu'**il comporte, après l'étape de récupération (130), une étape d'extrusion au cours de laquelle les agglomérats thermoplastiques récupérés subissent une extrusion.

5. Ligne de recyclage s'appliquant à des filaments thermoplastiques (52) mêlés à des matières indésirables (54) et comportant :
- des moyens d'alimentation configurés pour déposer les filaments thermoplastiques (52) et les matières indésirables (54) sur un tapis de convoyage horizontal,
- des moyens d'agglomération configurés pour compacter des fibrilles thermoplastiques (52) et les matières indésirables (54) sous forme d'agglomérats thermoplastiques, et
- des moyens de récupération configurés pour récupérer les agglomérats thermoplastiques,
la ligne de recyclage étant **caractérisée en ce qu'**elle comporte en outre :
- des moyens d'étalement configurés pour étaler horizontalement les filaments thermoplastiques (52) et les matières indésirables (54) afin de former une nappe,
- des moyens de coupe horizontale configurés pour araser la nappe de filaments thermoplastiques (52) et de matières indésirables (54) selon une direction parallèle au tapis de convoyage,
- des premiers moyens de coupe configurés pour découper la nappe de filaments thermoplastiques (52) et de matières indésirables (54) selon une première direction verticale,
- des deuxièmes moyens de coupe configurés pour découper des tronçons de filaments thermoplastiques (52) et de matières indésirables (54) selon une deuxième direction verticale orthogonale à la première direction verticale,
- des premiers moyens d'aspiration configurés pour aspirer vers le haut les filaments thermoplastiques (52) et les matières indésirables (54),
- des moyens d'effilochage configurés pour effilocher les filaments thermoplastiques (52) et les matières indésirables (54),
- des moyens de battage configurés pour battre les filaments thermoplastiques (52) et les matières indésirables (54),
- des moyens de pré-broyage configurés pour broyer les filaments thermoplastiques (52) et les matières indésirables (54) sous forme de fibrilles de 12 à 15 mm,
- des moyens de broyage configurés pour broyer et uniformiser les agglomérats thermoplastiques à une taille de 12 mm environ, et
- des moyens de séparation configurés pour séparer par gravimétrie les agglomérats thermoplastiques et les fines.

6. Ligne de recyclage selon la revendication 5, **caractérisée en ce qu'**elle comporte en outre entre les premiers moyens d'aspiration et les moyens d'effilochage :
- des moyens de brumisation configurés pour humidifier les filaments thermoplastiques (52) et les matières indésirables (54) par une brumisation d'eau,
- des moyens de brassage configurés pour brasser les filaments thermoplastiques (52) et les matières indésirables (54), et
- des deuxièmes moyens d'aspiration configurés pour aspirer vers le haut les filaments thermoplastiques (52) et les matières indésirables (54).

7. Ligne de recyclage selon l'une des revendications 6 ou 7, **caractérisée en ce qu'**elle comporte avant les moyens d'alimentation, des moyens de séchage configurés pour faire baisser le taux d'humidité des filaments thermoplastiques (52) et des matières indésirables (54) à 15%.

8. Ligne de recyclage selon l'une des revendications 5 à 7, **caractérisée en ce qu'**elle comporte, après les moyens de récupération, des moyens d'extrusion configurés pour réaliser une extrusion des agglomérats thermoplastiques.

9. Ligne de recyclage selon l'une des revendications 5 à 8, **caractérisée en ce que** les moyens d'étalement comportent des dents escamotables et animées d'un mouvement de va-et-vient.

## Patentansprüche

1. Recyclingverfahren (100), das für thermoplastische Fasern (52), die mit Schadstoffen (54) vermengt sind, angewandt wird, wobei das Recyclingverfahren (100) nacheinander umfasst:
- einen Zuführungsschritt (102), während dessen die thermoplastischen Fasern (52) und die Schadstoffe (54) in Paketen auf ein horizontales Förderband aufgebracht werden,
- einen Ausbreitungsschritt (103), während dessen die thermoplastischen Fasern (52) und die Schadstoffe (54) horizontal ausgebreitet werden, um eine Schicht zu bilden,
- einen Schritt des horizontalen Schneidens (104), während dessen die Schicht von thermoplastischen Fasern (52) und von Schadstoffen (54) entlang einer Richtung parallel zum Förderband nachgeschnitten wird,
- einen ersten Schneidschritt (106), während dessen die Schicht von thermoplastischen Fasern (52) und Schadstoffen (54) entlang einer ersten Vertikalrichtung geschnitten wird, wobei Abschnitte gebildet werden,
- einen zweiten Schneidschritt (108), während dessen die Abschnitte von thermoplastischen Fasern (52) und Schadstoffen (54) entlang einer zweiten Vertikalrichtung orthogonal zur ersten Vertikalrichtung geschnitten werden,
- einen ersten Ansaugschritt (110), während dessen die so geschnittenen thermoplastischen Fasern (52) und Schadstoffe (54) nach oben angesaugt werden,
- einen Schritt des Ausfransens (118), während dessen die so angesaugten thermoplastischen Fasern (52) und Schadstoffe (54) ausgefranst werden,
- einen Schritt des Dreschens (120), während dessen die so ausgefransten thermoplastischen Fasern (52) und Schadstoffe (54) gedroschen werden,
- einen Vorzerkleinerungsschritt (122), während dessen die so gedroschenen thermoplastischen Fasern (52) und Schadstoffe (54) in Form von Fibrillen von 12 bis 15 mm zerkleinert werden,
- einen Agglomerationsschritt (124), während dessen die so zerkleinerten thermoplastischen Fasern (52) und Schadstoffe (54) in Form von thermoplastischen Agglomeraten verdichtet werden, während sich die nicht agglomerierten Schadstoffe (54) und ein kleiner Teil der thermoplastischen Fibrillen vermischen und Feinpartikel bilden,
- einen Zerkleinerungsschritt (126), während dessen die thermoplastischen Agglomerate und die Feinpartikel zerkleinert werden, um die Größe der Agglomerate auf ungefähr 12 mm zu vereinheitlichen,
- einen Trennungsschritt (128), während dessen die so zerkleinerten und vereinheitlichten thermoplastischen Agglomerate und Feinpartikel gravimetrisch getrennt werden, und
- einen Wiedergewinnungsschritt (130), während dessen die so von den Feinpartikeln getrennten thermoplastischen Agglomerate wiedergewinnen werden und das Recycling-Thermoplast darstellen.

2. Recyclingverfahren (100) nach Anspruch 1, **dadurch gekennzeichnet, dass** es zwischen dem ersten Ansaugschritt (110) und dem Schritt des Ausfransens (118) umfasst:
- einen Vernebelungsschritt (112), während dessen die so angesaugten thermoplastischen Fasern (52) und Schadstoffe (54) durch eine Wasservernebelung befeuchtet werden,
- einen Schritt des Vermischens (114), während dessen die so befeuchteten thermoplastischen Fasern (52) und Schadstoffe (54) vermischt werden, und
- einen zweiten Ansaugschritt (116), während dessen die so vermischen thermoplastischen Fasern (52) und Schadstoffe (54) nach oben angesaugt werden.

3. Recyclingverfahren (100) nach einem der Ansprüche 1 oder 2, **dadurch gekennzeichnet, dass** es vor dem Zuführungsschritt (102) einen Trocknungsschritt umfasst, während dessen die thermoplastischen Fasern (52) und die Abfälle (54) einer Senkung der Feuchtigkeitsrate auf 15 % unterzogen werden.

4. Recyclingverfahren (100) nach einem der Ansprüche 1 bis 3, **dadurch gekennzeichnet, dass** es nach dem Wiedergewinnungsschritt (130) einen Extrusionsschritt umfasst, während dessen die wiedergewonnenen thermoplastischen Agglomerate einer Extrusion unterzogen werden.

5. Recyclinganlage, die für thermoplastische Fasern (52), die mit Schadstoffen (54) vermengt sind, angewandt wird, umfassend:
- Zuführungsmittel, die eingerichtet sind, um die thermoplastischen Fasern (52) und die Schadstoffe (54) in Paketen auf ein horizontales Förderband aufzubringen,
- Agglomerationsmittel, die eingerichtet sind, um thermoplastische Fibrillen (52) und die Schadstoffe (54) in Form von thermoplastischen Agglomeraten zu verdichten, und
- Wiedergewinnungsmittel, die eingerichtet sind, um die thermoplastischen Agglomerate wiederzugewinnen,
wobei die Recyclinganlage **dadurch gekennzeichnet ist, dass** sie ferner umfasst:
- Ausbreitungsmittel, die eingerichtet sind, um die thermoplastischen Fasern (52) und die Schadstoffe (54) horizontal auszubreiten, um eine Schicht zu bilden,
- Mittel zum horizontalen Schneiden, die eingerichtet sind, um die Schicht von thermoplastischen Fasern (52) und von Schadstoffen (54) entlang einer Richtung parallel zum Förderband nachzuschneiden,
- erste Schneidmittel, die eingerichtet sind, um die Schicht von thermoplastischen Fasern (52) und Schadstoffen (54) entlang einer ersten Vertikalrichtung zu schneiden,
- zweiten Schneidmittel, die eingerichtet sind, um die Abschnitte von thermoplastischen Fasern (52) und Schadstoffen (54) entlang einer zweiten Vertikalrichtung orthogonal zur ersten Vertikalrichtung zu schneiden,
- erste Ansaugmittel, die eingerichtet sind, um die thermoplastischen Fasern (52) und Schadstoffe (54) nach oben anzusaugen,
- Ausfransmittel, die eingerichtet sind, um die thermoplastischen Fasern (52) und Schadstoffe (54) auszufransen,
- Dreschmittel, die eingerichtet sind, um die thermoplastischen Fasern (52) und Schadstoffe (54) zu dreschen,
- Vorzerkleinerungsmittel, die eingerichtet sind, um die thermoplastischen Fasern (52) und Schadstoffe (54) in Form von Fibrillen von 12 bis 15 mm zu zerkleinern,
- Zerkleinerungsmittel, die eingerichtet sind, um die thermoplastischen Agglomerate zu zerkleinern und auf ungefähr 12 mm zu vereinheitlichen, und
- Trennungsmittel, die eingerichtet sind, um die thermoplastischen Agglomerate und Feinpartikel gravimetrisch zu trennen.

6. Recyclinganlage nach Anspruch 5, **dadurch gekennzeichnet, dass** sie ferner zwischen den ersten Ansaugmitteln und den Ausfransmitteln umfasst:
- Vernebelungsmittel, die eingerichtet sind, um die thermoplastischen Fasern (52) und die Schadstoffe (54) durch Wasservernebelung zu befeuchten,
- Mittel zum Vermischen, die eingerichtet sind, um die thermoplastischen Fasern (52) und die Schadstoffe (54) zu vermischen, und
- zweite Ansaugmittel, die eingerichtet sind, um die thermoplastischen Fasern (52) und die Schadstoffe (54) nach oben anzusaugen.

7. Recyclinganlage nach einem der Ansprüche 6 oder 7, **dadurch gekennzeichnet, dass** sie vor den Zuführungsmittel Trocknungsmittel umfasst, die eingerichtet sind, um die Feuchtigkeitsrate der thermoplastischen Fasern (52) und Schadstoffe (54) auf 15 % zu senken.

8. Recyclinganlage nach einem der Ansprüche 5 bis 7, **dadurch gekennzeichnet, dass** sie nach den Wiedergewinnungsmitteln Extrusionsmittel umfasst, die eingerichtet sind, um eine Extrusion der thermoplastischen Agglomerate durchzuführen.

9. Recyclinganlage nach einem der Ansprüche 5 bis 8, **dadurch gekennzeichnet, dass** die Ausbreitungsmittel einziehbare Zähne umfassen und eine Hin- und Herbewegung ausführen.

## Claims

1. Recycling method (100) applying, to thermoplastic filaments (52) mixed with undesirable materials (54), the recycling method (100) comprising successively:
- a feed step (102) during which the thermoplastic filaments (52) and the undesirable materials (54) are deposited in packets on a horizontal conveyor belt,
- a spreading step (103) during which the thermoplastic filaments (52) and the undesirable materials (54) are spread horizontally so as to form a layer,
- a horizontal cutting step (104) during which the layer of thermoplastic filaments (52) and undesirable materials (54) is levelled in a direction parallel to the conveyor belt,
- a first cutting step (106) during which the layer of thermoplastic filaments (52) and undesirable materials (54) is cut in a first vertical direction, forming portions;
- a second cutting step (108) during which the portions of layers of thermoplastic filaments (52) and undesirable materials (54) are cut in a second vertical direction orthogonal to the first vertical direction,
- a first aspiration step (110) during which the thermoplastic filaments (52) and the undesirable materials (54) thus cut are aspirated upwards,
- a tearing step (118) during which the thermoplastic filaments (52) and undesirable materials (54) thus aspirated are torn,
- a beating step (120) during which the thermoplastic filaments (52) and the undesirable materials (54) thus torn are beaten,
- a preliminary grinding step (122) during which the thermoplastic filaments (52) and the undesirable materials (54) thus beaten are ground in the form of fibrils of 12 to 15 mm,
- an agglomeration step (124) during which the thermoplastic filaments (52) and the undesirable materials (54) thus ground are compacted in the form of thermoplastic agglomerates, while the undesirable materials (54) and a small part of the non-agglomerated thermoplastic fibrils mix and form fines,
- a grinding step (126) during which the thermoplastic agglomerates and the fines are ground so as to make the size of the agglomerates uniform at approximately 12 mm,
- a separation step (128) during which the thermoplastic agglomerates and the fines thus ground and made uniform are separated by gravimetry, and
- a recovery step (130) during which the thermoplastic agglomerates thus separated from the fines are recovered and constitute the recycled thermoplastic.

2. Recycling method (100) according to claim 1, **characterised in that** it comprises, between the first aspiration step (110) and the tearing step (118):
- an atomisation step (112) during which the thermoplastic filaments (52) and undesirable materials (54) thus aspirated are wetted by atomisation of water,
- a stirring step (114) during which the thermoplastic filaments (52) and the undesirable materials (54) thus wetted are stirred, and
- a second aspiration step (116) during which the thermoplastic filaments (52) and the undesirable materials (54) thus stirred are aspirated upwards.

3. Recycling method (100) according to either claim 1 or claim 2, **characterised in that** it comprises, before the feed step (102), a drying step during which the thermoplastic filaments (52) and the waste (54) undergo a reduction in the moisture level to 15%.

4. Recycling method (100) according to any of claims 1 to 3, **characterised in that** it comprises, after the recovery step (130), an extrusion step during which the thermoplastic agglomerates recovered undergo extrusion.

5. Recycling line applied to thermoplastic filaments (52) mixed with undesirable materials (54) and comprising:
- feed means configured to deposit the thermoplastic filaments (52) mixed with undesirable materials (54) on an horizontal conveyor belt,
- agglomeration means configured to compact thermoplastic fibrils (52) and the undesirable materials (54) in the form of thermoplastic agglomerates, and
- recovery means configured to recover the thermoplastic agglomerates,
the recycling line being **characterised in that** it comprises also:
- spreading means configured to spread horizontally the thermoplastic filaments (52) and the undesirable materials (54) in order to form a layer,
- horizontal cutting means configured to level the layer of thermoplastic filaments (52) and undesirable materials (54) in a direction parallel to the conveyor belt,
- first cutting means, configured to cut the layer of thermoplastic filaments (52) and undesirable materials (5) in a first vertical direction,
- second cutting means configured to cut portions of thermoplastic filaments (52) and undesirable materials (54) in a second vertical direction orthogonal to the first vertical direction,
- first aspiration means configured to aspirate the thermoplastic filaments (52) and the undesirable materials (54) upwards,
- tearing means configured to tear the thermoplastic filaments (52) and the undesirable materials (54),
- beating means configured to beat the thermoplastic filaments (52) and the undesirable materials (54),
- preliminary grinding means configured to grind the thermoplastic filaments (52) and the undesirable materials (54) in the form of fibrils measuring 12 to 15 mm,
- grinding means configured to grind and make uniform the thermoplastic agglomerates to a size of approximately 12 mm, and
- separation means configured to separate by gravimetry the thermoplastic agglomerates and the fines.

6. Recycling line according to claim 5, **characterised in that** it further comprises, between the first aspiration means and the tearing means:
- atomisation means configured to wet the thermoplastic filaments (52) and the undesirable materials (54) by atomisation of water,
- stirring means configured to stir the thermoplastic filaments (52) and the undesirable materials (54), and
- second aspiration means configured to aspirate the thermoplastic filaments (52) and the undesirable materials (54) upwards.

7. Recycling line according to either claim 6 or claim 7, **characterised in that** it comprises, before the feed means, drying means configured to lower the moisture level of the thermoplastic filaments (52) and undesirable materials (54) to 15%.

8. Recycling line according to any of claims 5 to 7, **characterised in that** it comprises, after the recovery means, extrusion means configured to extrude the thermoplastic agglomerates.

9. Recycling line according to any of claims 5 to 8, **characterised in that** the spreading means comprises retractable teeth driven in a reciprocating movement.
